# EUROPEAN PATENT SPECIFICATION

(11) **EP 1 844 565 B1**
(45) Date of publication and mention of the grant of the patent: **26.12.2012**
(21) Application number: 06719603.0
(22) Date of filing: 26.01.2006
(51) Int. Cl.: H04J 14/00, G06F 15/173, H04B 10/20, H04L 12/24

(54) **CAPACITY MANAGEMENT SYSTEM FOR PASSIVE OPTICAL NETWORKS**
KAPAZITÄTSVERWALTUNGSSYSTEM FÜR PASSIVE OPTISCHE NETZWERKE
SYSTEME DE GESTION DE CAPACITE POUR RESEAUX OPTIQUES PASSIFS

(30) Priority: 26.01.2005 US 647314 P
(43) Date of publication of application: 17.10.2007
(73) Proprietor: Telcordia Licensing Company LLC, Piscataway, NJ 08854 (US)
(72) Inventor: KERPEZ, Kenneth, Long Valley, New Jersey 07853 (US)
(74) Representative: Ablett, Graham Keith
(86) International application number: PCT/US2006/002811
(87) International publication number: WO 2006/081365

(56) References cited:
- US-A1- 2002 172 216
- US-A1- 2004 033 075
- US-A1- 2004 109 689
- US-B1- 6 522 629
- MIYOSHI H ET AL: "QoS-aware dynamic bandwidth allocation scheme in gigabit-ethernet passive optical networks", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 1, 20 June 2004 (2004-06-20), pages 90-94, XP010710351, DOI: DOI:10.1109/ICC.2004.1312458 ISBN: 978-0-7803-8533-7

## Description

### FIELD OF THE INVENTION

The present invention relates generally to optical fiber based communication networks, and more particularly, a system for the management of passive optical networks (PON) as they are employed in FTTP networks connecting a central office to a plurality of customer premises terminals for the purpose of broadband access.

### BACKGROUND

The telecommunications industry has been working on the implementation of Fiber to the Premises (FTTP) technology for many years. Recently, with additional competition from the cable industry offering broadband access to homes and businesses through hybrid fiber coax (HFC) networks the traditional wireline telecommunications carriers have rapidly increased deployment of FTTP technology. Part of the FTTP deployment by the wireline carriers will be passive optical networks (PON). A PON is a fiber optic network without active electronics delivering signals to multiple terminal devices using passive splitters. PON is often used to connect the local loop to the customer premises in FTTP networks.

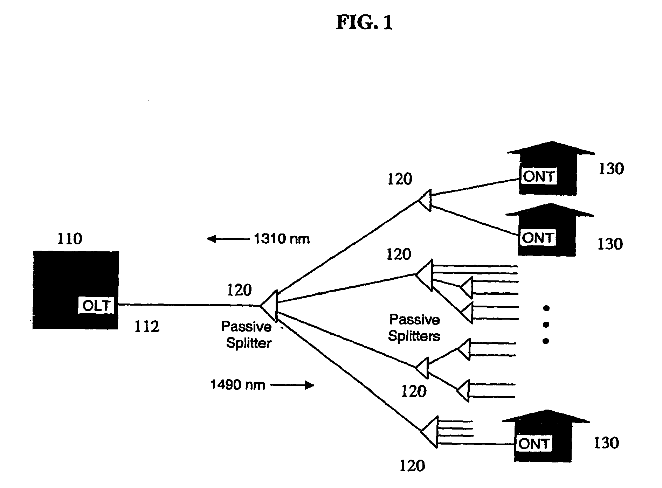

Transmissions in a passive optical network (PON), such as that depicted in FIG.1, run between an optical line terminal (OLT) 112 and optical network terminals (ONTs) 130. The OLT 112 resides in the central office (CO) 110 or similar location, and connects the optical access network to the backbone (not shown). The ONT 130 is located at or near the subscriber location (also referred to herein as the customer premises), and the ONT is sometimes also called the Optical Network Unit (ONU). PONs are referred to as point-to-multipoint (P2MP) networks. In the downstream direction (from OLT to ONTs), a PON is a broadcast network, and in the upstream direction a PON is a multipoint-to-point network, as shown in FIG. 1.

In the downstream direction, the signal transmitted by the OLT 112 pass through a 1:N passive splitter 120, or a series of such splitters that result in the signal reaching all N ONTs. PONs typically use single-mode fiber with up to about 32 splits over no more than 20 km. Slower (155 Mbps) PONs can typically tolerate more splits than faster (≥1 Gbps) PONs.

PONs typically modulate downstream signals on one wavelength (1490 nm) and upstream on another wavelength (1310 nm) although other wavelengths may be used in any specific system. Broadcast video signals can be carried downstream on an overlaid third wavelength (1550 nm). In the upstream direction, due to the directional property of the passive splitters 120, data frames from any ONT 130 will only reach the OLT 112, not the other ONTs. Signals from different ONTs transmitted simultaneously would collide if not properly scheduled. For this reason, PON protocols have upstream transmissions scheduled according to instructions issued by the OLT. The propagation delays from each ONT are recorded in a ranging procedure, and are compensated by TDM scheduling upstream transmissions as well as a small guard space.

Today's PONs typically employ a dynamic bandwidth allocation (DBA) mechanism, that reports upstream traffic volumes in real-time to the OLT, so the OLT can then assign upstream time slots. Much work, particularly by PON vendors, has focused on creating efficient DBA algorithms for handling traffic in real-time. Because the PON is a shared medium, problems can arise if too many subscribers sign up for too many services. While this will eventually manifest itself as a problem in real-time DBA scheduling, DBA scheduling of itself is not capable of deciding if users should be allowed to subscribe to any individual services.

Prior art systems have focused on defining real-time scheduling mechanisms for allocating time slots for transmission requests. For example, see H. Miyoshi, T.. Inoue and K. Yamashita, "QoS-aware Dynamic Bandwidth Allocation Scheme in Gigabit-Ethernet Passive Optical Networks" 2004 IEEE International Conference on Communications, 2004; and G. Kramer, B. Mukherjee, S. Dixit, Y. Ye, and R. Hirth, "supporting Differentiated Classes of Service in Ethernet Passive Optical Networks", Journal of Optical Networking, vol. 1, no. 8/9, pp. 280-298, August 2002.

PON-based FTTP networks such as the one depicted in FIG. 1 are now considered to be the broadband access network of the future, offering plentiful bandwidth capacity. However, it's often been demonstrated that what appears to be plentiful capacity at one point in time becomes a scarce resource at a later point in time. PON bandwidth is ample for realistic scenarios of the numbers of services that are likely to be requested today, and service providers are (justifiably) not currently concerned with over-subscription. For example, with 32 users sharing a 622 Mbps PON, they each get roughly 20 Mbps, ample for current broadband needs. However, future services such as all-digital HDTV on demand, advanced Internet services, and Internet Protocol based TV (IPTV), can easily change his equation.

Therefore, it would be desirable to have a method and system enabling accurate knowledge and management of the capacity of a PON network that efficiently aggregates the signals of up to about 32 customer premises subscribers into a single signal on a single glass fiber at a central office.

Additionally, it would be desirable to have a method and system for PON capacity management that keeps track of overheads associated with scheduling shared PON time slots, particularly upstream, thereby managing service subscriptions to maximize PON usage while maintaining quality of service (QoS).

Furthermore, it would be desirable to have a planning process for identifying PON related service problems before they actually occur by precisely determining if all performance objectives can be met, or if some services should be assigned lower priority or blocked altogether.

Finally, it would be desirable to have a system and method for determining if reported troubles are due to a PON simply being overloaded with traffic.

### SUMMARY

The system and method of the present invention enables capacity management of Passive Optic Networks (PON), which are used for deploying Fiber to the Premises (FTTP) broadband access networks. The PON capacity management method and system of the present invention allows the user to govern bandwidth allocation, admission control and service-level management in the PON shared-medium broadband access network. The invention models the operation and performance of a set of subscriber's services to be transmitted on a PON before the services are ever actually deployed. This allows an operator to identify problems before they actually occur, and precisely determine if all performance objectives can be met, or if some services should be assigned lower priority, lower bandwidth, or be blocked altogether. It also allows relatively unskilled service order personnel to precisely pre-determine the QoS impact of trying to squeeze a few more service requests onto a PON.

The invention is a tool that accurately predicts the performance of each different priority or service level on a PON with multiple different service types and multiple users. Delays and bit rates are computed accounting for all packet, protocol, propagation, and scheduling overhead. The performance and delays of all services are further verified by running a real-time simulation that identically mimics the operation of an actual PON, resulting in very close prediction of the performances of different services before the services are actually used or tested for use by the subscribers. The invention allows the service provider to sell the maximum number of services possible, while still ensuring that they can all function acceptably.

A PON modeling tool models and predicts capacity of a passive optical network for connecting subscribers using customer premises terminals to a central office for the purpose of providing broadband service. A user of the PON modeling tool inputs data regarding a plurality of characteristics of the PON. The PON modeling tool then simulates the performance of the PON based on the input characteristics and determines whether the PON has the ability to deliver the services to the input number of subscribers. The PON modeling tool outputs the determination to the user.

The user of the PON modeling tool inputs data regarding a number of characteristics of the PON including the PON type, the number of subscribers, service bandwidths, service priorities, dynamic bandwidth allocation parameters, pass/fail tolerances, framing parameters, packetization parameters, and scheduling parameters. The data regarding the number of subscribers, service bandwidths and service priorities can be generated statistically based on probabilities of subscription usage and take rates. Alternatively, the data regarding the number of subscribers, service bandwidths and service priorities can be based on a specific set of requests for services available on the PON. The PON modeling tool determines average and maximum delays for each type of service based on the input data regarding the characteristics of the PON. This information is presented to the user who can then change some of the PON characteristics based on the output in order to iteratively and interactively model a PON and maximize its usage.

### BRIEF DESCRIPTION OF THE DRAWINGS

FIG. 1 depicts the architecture of an FTTP network from the central office to the customer premises;

FIG. 2 is a diagram depicting the functional characteristics of a PON Modeler in accordance with the present invention;

FIG. 3 depicts the graphical user interface for input data in an embodiment of a PON Modeler in accordance with the present invention;

FIG. 4 depicts the graphical user interface for output data in an embodiment of a PON Modeler in accordance with the present invention; and,

FIG. 5 depicts a flow diagram of the computer implemented method for modeling PON in accordance with the present invention.

### DETAILED DESCRIPTION OF THE DRAWINGS

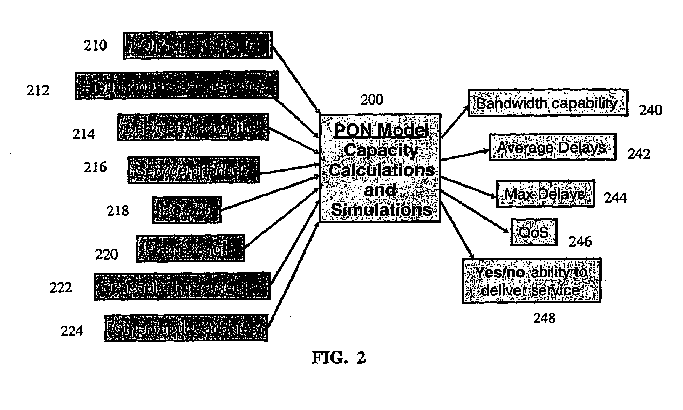

Referring to FIG. 2 which depicts a functional drawing of the PON capacity management system of the present invention is shown in Figure 2. The PON Modeler **200** in the middle performs calculations and simulations to determine PON capacity. This PON Modeler **200** uses certain physical parameters as inputs **210-224.** Some of the possible input parameters are shown in FIG. 2. PON type (B, G, E) **210** provides PON Modeler **200** with the type of PON being used with B denoting a Broadband PON, G denoting Giga-PON and E denoting an Ethernet PON. Input **212** provides PON Modeler **200** with the number of subscribers for each type of service. Input **214** provides the PON modeler **200** with the service bandwidths, i.e, HDTV uses 9 Mbps downstream, digital telephony uses 64 kbps both upstream and downstream, average subscribed Internet bandwidth is 1 Mbps upstream and 3 Mbps downstream, etc. Input **216** provides the PON Modeler **210** with the service priorities. Input **218** provides the PON Modeler with PON fill which is the number of each service with preassigned bandwidths and priorities that each subscriber uses, as well as the subscribed bandwidth of variable bandwidth services such as Internet access for each user. Input **220** provides the PON Modeler **200** with the frame length of the PON, which is the cycle time during which users are granted a series of time slots for upstream transmission. Input **222** provides the PON Modeler **200** with the scheduling parameters of time-slot assignments and dynamic bandwidth allocation (DBA) on the PON, which accounts for delay-sensitive and priority traffic. Input **224** provides other input variables such as bit rate and propagation delay. PON Modeler **200** models the behavior of the medium access control (MAC) layer 2 packet multiplexing of all services and user's packet streams onto the PON shared medium. Downstream PON MAC operation is based on the knowledge that all user's data is broadcast from the OLT and the ONT transceivers only retain data for their own ID.

Upstream PON MAC scheduling is quite complicated. The upstream MAC is simulated in the model according to current standards and typical practices: the ITU-T G.983 series standards specifying Broadband PON (BPON), the ITU-T G.984 series standards specifying Gigabit PON (GPON), and the IEEE 802.3ah standard specifying Ethernet PON (EPON). These different types of PONs (BPON, EPON, GPON) work slightly differently and so they each have different models. However, they currently all run similarly, using time division. Each ONT transmits in a separate time slot from other ONTs, and upstream transmissions are scheduled so that they arrive non-overlapping at the OLT. The OLT allocates variable length upstream time slots to each ONT in response to requests from the ONTs. A framing method can be employed where each active ONT is allowed to transmit upstream once in each (roughly one millisecond) frame. The many overheads associated with running the PON, such as guard space between each user's upstream transmissions, OAM packets to request and assign time slots, segmentation, packet headers, etc., are all included in the tool's model.

Inputs to the tool include parameters specific to an individual PON or a specific PON service scenario, including the numbers of users, the numbers of each subscribed service type, and priorities. Inputs also include overall background definitions of the type of PON, and parameters that can be varied in the operation of the PON MAC and physical layers. Input parameters are also defined for each individual service type, including traffic characteristics, higher-layer packetization, and bit rates.

Outputs from the tool include overall sums of the bandwidth consumed from all services data and overhead, individual sums of different classes of service, these sums expressed as percentages; and a display of the available bandwidth remaining after the requested services are fulfilled. Outputs also include maximum, average, and standard deviation of the packet delay of each service or priority class.

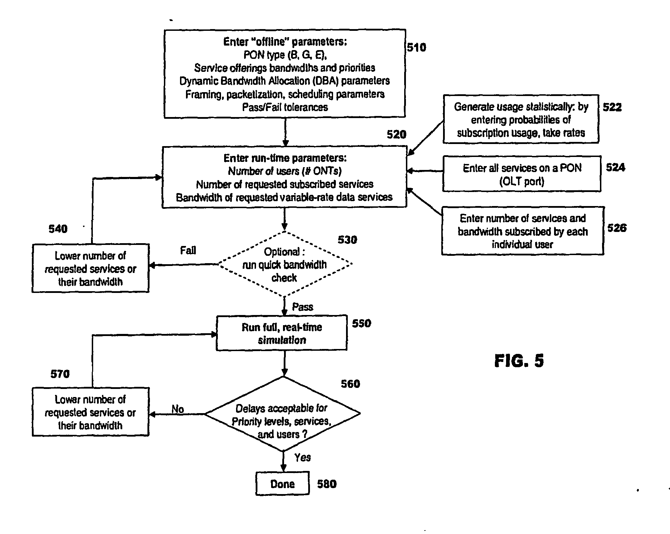

A fully functional prototype of the invention has been built in a software tool. FIG. 5 is a flow diagram depicting the flow of information in the PON modeling tool of the present invention. At step **510** the user of the system enters the "offline" parameters: PON type; service offering bandwidths and priorities; Dynamic Bandwidth Allocation (DBA) parameters; framing, packetization and scheduling parameters; and, pass/fail tolerances. At step **520** the user enters run-time parameters: the number of users/number of ONTs; the number of requested subscriber services; and, the bandwidth of requested variable-rate data services. Steps **522, 524** and **526** show the three different ways this can be accomplished by the user of the PON Modeler. In step **522** the user generates the usage data statistically by entering the probabilities of subscription usage and take rates. In step **524** the user enters all services on a PON (OLT port). In step **526** the user enters the number of services and the bandwidth subscribed to for each service by individual user.

If the user has selected to run the option quick bandwidth check this is performed at step **530** and processing continues to step **550** if the selected services and bandwidths can be supported Otherwise at step **540**, the user is requested to lower the number of requested services and/or lower their bandwidth before the quick bandwidth check is re-run at step **530.** At step **550,** the full, real-time simulation is run. At step **560** it is determined whether the delays are acceptable for priority levels, service and users of the PON. If the answer is affirmative the PON simulation is complete. If the user of the PON Modeler determines that the delays are not acceptable, then the user lowers the number of requested service and/or lowers their bandwidth at step **570** and the full, real-time simulation is re-run at step **550.**

The tool is written in the Java programming language, using server-side Java, allowing a general-purpose web browser such as Microsoft Explore or Netscape Navigator to be the client GUI while the calculations are performed on the server. The software can be executed on any general purpose computer capable of being used as a server. The current system presents input screens on the client in HTML, which are then returned to the server which inputs the user-entered data into Java servlets. The servlets in turn call the core algorithms. Results are returned by the servlets in HTML web pages that are sent to the client upon completion of the core algorithm calculations. The prototype server supports Java servlets, currently the Apache Tomcat server is used for this. The client can be any web browser. All calculations are performed in the server. The system closely mimics a PON system without requiring the laborious effort that would otherwise be required to configure and test run actual PON equipment.

This tool currently allows the user to run the tool in one of three ways, by allowing one of three ways of specifying input data for each run. In the first option (Option 1) for each PON subscriber, the numbers of each service and the bit rate of variable bit rate services are specified. In the second option (Option 2), the aggregate number of each service for all users on a single PON and the aggregate bit rate of variable bit rate services are specified. In the third option (Option 3), the statistical average probability that each user subscribes to each service (service take rate) as well as the maximum, minimum, and average bit rate of variable bit rate services are specified. Option 1 and Option 2. allow individual service subscription requests to be tested to see if they will offer acceptable performance, before the services are actually deployed. If performance is inadequate, then allocating fewer services will improve performance, and then an iterative process can be performed until performance is acceptable by successively lowering the number of sold services, or lowering the bandwidth of some service levels. Option 3 allows projections of service usage and performance across various demographics, and can be used to formulate business decisions such as pricing services to optimize revenue.

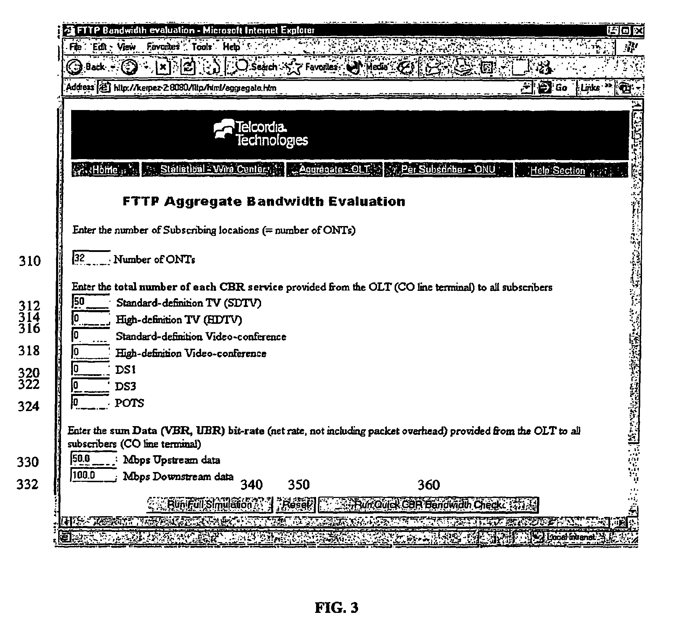

FIG. 3 depicts the graphical user interface (GUI) displayed to the user of the PON Modeler for collecting information about the PON. Field **310** requires the user to input the number of subscribing locations in the PON, i.e., the number of ONTs. Fields **312-324** require the user to input the total number of subscribers receiving various types of constant bit rate (CBR) services from the OLT in the CO. Field **312** is for standard-definition TV (SDTV). Field **314** is for high-definition (HDTV). Field **316** is for standard-definition videoconference service. Field **318** is used for high-definition videoconference service. Field **320** is for DS1 service. Field **322** is for DS3 service and field **324** is for POTS service. Fields **330** and **332** provide places for the user to input data regarding the sum data (VBR, UBR) bit-rate provided from the OLT to all subscribers in the upstream direction (Field **330**) and the downstream direction (Field **332.** This is the net rate and does not include packet overhead. Button **350** at the bottom of FIG. 3 enables the user to clear the input fields simultaneously. The software is flexibly designed to allow any other services to be defined and entered, as well as to assign different bandwidths and priority levels.

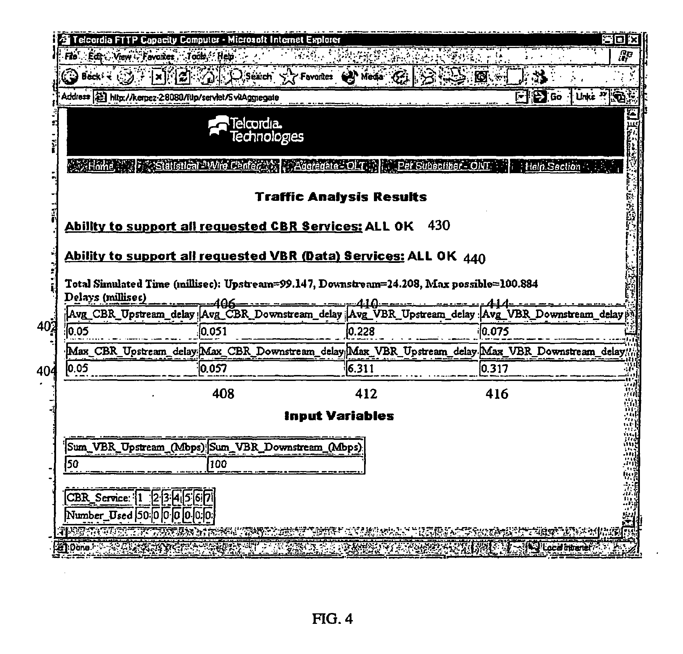

For the first two types of inputs, the user may choose to run a "quick" calculation or a full simulation as shown in FIG. 3. By selecting button **360** in the graphical user interface shown in FIG.4, the quick calculation sums all services usage, accounting for each service's packet and protocol overhead as well as the PON overhead, for a quick pass/fail determination of the ability to carry the requested CBR services. The quick calculation also outputs the quantity of any leftover net bandwidth that may be used for other services, including data services.

The full simulation selected by the user using button **340** runs a real-time simulation that pseudo-randomly generates multiple traffic streams from multiple service types and subscribers and mimics the operation of the actual PON in aggregating these on the PON in both the upstream and downstream directions. Various traffic sources may be simulated and injected on the PON, including constant bit rate (CBR) services and variable bit rate (VBR) services. VBR data service sources are generated with a self-similar packet-based source generator. Each user has both upstream and downstream queues for each service or priority level, these queues are continuously filled and emptied in first-in first-out manner as the PON operation is simulated. Higher priority services packets are sent on the PON before lower priority services packets. The times of packet arrival at the PON and the times of packet departure from the other end of the PON are tracked, and statistics of these are determined for each service level and user queue. The system determines and displays these statistics on the delays encountered in this PON scheduling and packetization process for each service type. A generic and reasonably high performance Dynamic Bandwidth Allocation (DBA) algorithm is currently used for real-time scheduling, which allocates some upstream bandwidth based on current queue sizes, as well a allocating some bandwidth among all users according to pre-set levels. All physical and protocol delays are included in the simulation. This yields packet delay statistics for each service type, which are used to determine if these delays are tolerable for the specified services - which essentially tells if the bandwidth is sufficient.

The tool takes the raw results and compares them to user-entered quality of service (QoS) thresholds to output a simple yes or no type of interpretation of the ability to support all requested services. The tool may be employed interactively or pre-set to block or shed individual low-priority or unnecessary service requests until QoS thresholds are satisfied. The capability to support future service requests can be precisely modeled and room can be reserved to ensure these can be deployed in the future.

The third option is to have statistical inputs, which may be used for planning purposes. Here, the actual number of service subscriptions and data rates is randomly generated multiple times according to the entered statistics, and then the real-time simulation is re-run for each of these times. Overall performance results are aggregated across these runs, the aggregate is output and presented to the user.

Either ATM-based Broadband PON (BPON), or Ethernet PON (EPON), or Giga-PON (GPON) can currently be analyzed. Internal variables such as the line bit rates, guard space, packet sizes, bit rates of CBR services, length of simulated time, and many others can easily be changed to tailor to a particular environment or PON implementation. While two service priorities (CBR has higher priority than VBR) are currently implemented in the GUI, the core algorithm software is flexibly written and could allow any number of service priorities on PON.

Data traffic, called variable bit rate (VBR) or unspecified bit rate (UBR) data traffic is pseudo-randomly generated with a self-similar traffic generator, and statistics such as average or peak bit rate can be varied by the user. Constant bit rate (CBR) traffic is generated with the timing requirements necessary for TDM services, video, and POTS. The various protocol overheads associated with each type of service are accounted for and simulated. Data traffic is TCP/IP and Ethernet encapsulated, and video is encapsulated in MPEG2 transport streams or with MPEG4 on RTP. For EPON POTS is encapsulated over UDP/IP and for BPON POTS is encapsulated directly into ATM cells. TDM (DS1 and DS3) services are also simulated as well as video conferencing. ATM cell and ATM AAL overhead is simulated for BPON. GPON is simulated with the GPON encapsulation method (GEM).

FIG. 4 depicts a graphical user interface of the output screen of a PON Modeler in accordance with the present invention. Output fields **430** and **440** provide an indication as to whether the PON has the ability to support all requested CBR and VBR services respectively. Output fields **402-416** provide information about the delays in milliseconds that can be expected with the various types of services in the modeled PON. Output field **402** provides the average CBR upstream delay. Output field **404** provides the maximum CBR delay in the upstream direction. Output field **406** provides the average CBR downstream delay, while output field **408** provides the maximum CBR downstream delay. Output field **410** provides the average VBR upstream delay. Output field **412** provides the maximum VBR upstream delay. Finally, output fields **414** and **416** provide the average and maximum VBR delay in the downstream direction respectively.

The above description has been presented only to illustrate and describe the invention. It is not intended to be exhaustive or to limit the invention to any precise form disclosed. Many modifications and variations are possible in light of the above teaching. The applications described were chosen and described in order to best explain the principles of the invention and its practical application to enable others skilled in the art to best utilize the invention on various applications and with various modifications as are suited to the particular use contemplated.

## Claims

1. A method for modeling and predicting capacity management of a passive optical network for connecting a plurality of subscribers to a central office for the purpose of providing broadband service comprising the steps of:
receiving data regarding a plurality of characteristics of the passive optical network and the services to be provided using the passive optical network;
Predicting the performance of the passive optical network via a real-time simulation incorporating simulated traffic streams and based on the received characteristics;
determining whether the passive optical network has the ability to deliver the services to be provided;
outputting the determination to a user.

2. The method of claim 1 wherein the plurality of the characteristics of the passive optical network are selected from the set comprising: passive optical network type; number of subscribers; service bandwidths; service priorities; dynamic bandwidth allocation parameters; pass/fail tolerances; framing parameters; packetization parameters; and scheduling parameters.

3. The method of claim 2 wherein the data regarding the number of subscribers, service bandwidths and service priorities is generated statistically based on probabilities of subscription usage and take rates.

4. The method of claim 2 wherein the data regarding the number of subscribers, service bandwidths and service priorities is based on a selected set of services on a single passive optical network.

5. The method of claim 2 wherein the data regarding the number of services, service bandwidths and service priorities are based on subscribers selections.

6. The method of claim 1 further comprising the steps of:
determining an average delay for each type of service based on the received data regarding the plurality of characteristics of the passive optical network;
presenting the determined average delay for each type of service to the user.

7. The method of claim 1 further comprising the steps of:
determining a maximum delay for each type of service based on the received data regarding the plurality of characteristics of the passive optical network;
presenting the determined maximum delay for each type of service based on the received data regarding the plurality of characteristics of the passive optical network.

8. The method of claim 1 further comprising the step of iteratively inputting changes to data regarding the characteristics of the passive optical network if the determination is that the passive optical network does not have the ability to support the services to be provided and reiterating the step of determining until it is determined that the passive optical network does have the ability to support the services.

9. The method of claim 6 further comprising the step of iteratively inputting changes to data regarding the characteristics of the passive optical network if the determination is that the average delays are unacceptable and reiterating the step of determining the average delay until it is determined that the average delays are acceptable.

10. The method of claim 7 further comprising the step of iteratively receiving changes to data regarding the characteristics of the passive optical network if the determination is that the maximum delays are unacceptable and reiterating the step of determining the maximum delay until it is determined that the maximum delays are acceptable.

11. A system for modeling and predicting capacity management of a passive optical network for connecting a plurality of subscribers using customer premises terminals to a central office for the purpose of providing broadband service comprising:
a user interface for receiving data regarding a plurality of characteristics of the passive optical network; and
a passive optical network modeler for predicting the performance of the passive optical network via a real-time simulation incorporating simulated traffic streams and based on the received characteristics, said passive optical network modeler determining whether the passive optical network has the ability to deliver the service to be provided based on the predicted performance.

12. The system of claim 11 wherein the plurality of the characteristics of the passive optical network are selected from the set comprising: passive optical network type; number of subscribers; service bandwidths; service priorities; dynamic bandwidth allocation parameters; pass/fail tolerances; framing parameters; packetization parameters; and scheduling parameters.

13. The system of claim 12 wherein the data regarding the number of subscribers, service bandwidths and service priorities is generated statistically based on probabilities of subscription usage and take rates.

14. The system of claim 12 wherein the data regarding the number of subscribers, service bandwidths and service priorities is based on services available on the passive optical network.

15. The system of claim 12 wherein the data regarding the number of services, service bandwidths and service priorities are based on subscribers selections.

16. The system of claim 11 wherein the passive optical network modeler determines an average delay for each type of service based on the received data regarding the plurality of characteristics of the passive optical network.

17. The system of claim 11 further comprising means for:
determining a maximum delay for each type of service based on the received data regarding the plurality of characteristics of the passive optical network;
presenting the determined maximum delay for each type of service based on the received data regarding the plurality of characteristics of the passive optical network.

## Patentansprüche

1. Ein Verfahren zum Modellieren und zur Vorhersage des Kapazitätsmanagements eines passiven optischen Netzwerks zum Anschluss einer Reihe von Teilnehmern an ein zentrales Büro zwecks Bereitstellung eines Breitbandservice bestehend aus folgenden Schritten:
Empfang von Daten hinsichtlich mehrerer Merkmale des passiven optischen Netzwerks und der bereitzustellenden Services unter Verwendung des passiven Netzwerks;
Vorhersage der Leistung des passiven optischen Netzwerks über eine Echtzeit-Simulation unter Einbeziehung simulierter Verkehrsströme und basierend auf den empfangenen Merkmalen;
Feststellen, ob das passive optische Netzwerk die bereitzustellenden Services liefern kann;
Ausgabe der Feststellung an einen User.

2. Das Verfahren entsprechend Anspruch 1, wobei die mehreren Merkmale des passiven optischen Netzwerks von der Reihe bestehend aus Folgenden ausgewählt werden; Art des passiven optischen Netzwerks, Anzahl der Teilnehmer, Servicebandbreiten, Serviceprioritäten, Parameter für dynamische Bandbreitenzuteilung, Pass-/Fail-Toleranzen, Rahmenparameter, Paketisierungsparameter und Ablaufparameter.

3. Das Verfahren entsprechend Anspruch 2, wobei die Daten hinsichtlich der Anzahl der Teilnehmer, Servicebandbreiten und Serviceprioritäten statistisch auf der Basis von wahrscheinlicher Abonnementnutzung und Vertragsabschlüssen erstellt werden.

4. Das Verfahren entsprechend Anspruch 2, wobei die Daten hinsichtlich der Anzahl der Teilnehmer, Servicebandbreiten und Serviceprioritäten auf einem ausgewählten Satz an Services auf einem einzelnen passiven, optischen Netzwerk basieren.

5. Das Verfahren entsprechend Anspruch 2, wobei die Daten hinsichtlich der Anzahl der Teilnehmer, Servicebandbreiten und Serviceprioritäten auf Teilnehmerauswahl basieren.

6. Das Verfahren entsprechend Anspruch 1, zu dem weiterhin folgende Schritte gehören:
Feststellen einer durchschnittlichen Verzögerung für jeden Servicetyp basierend auf den empfangenen Daten hinsichtlich der mehreren Merkmale des passiven optischen Netzwerks;
Vorlage der festgestellten durchschnittlichen Verzögerung für jeden Servicetyp an den User.

7. Das Verfahren entsprechend Anspruch 1, zu dem weiterhin folgende Schritte gehören:
Feststellen einer maximalen Verzögerung für jeden Servicetyp basierend auf den empfangenen Daten hinsichtlich der mehreren Merkmale des passiven optischen Netzwerks;
Vorlage der festgestellten maximalen Verzögerung für jeden Servicetyp basierend auf den empfangenen Daten hinsichtlich der mehreren Merkmale des passiven optischen Netzwerks.

8. Das Verfahren entsprechend Anspruch 1, zu dem weiterhin der Schritt der wiederholten Eingabe von Änderungen an Daten hinsichtlich der Merkmale des passiven optischen Netzwerks gehört, wenn festgestellt wird, dass das passive optische Netzwerk die bereitzustellenden Services nicht unterstützen kann, und Wiederholen des Schritts der Feststellung bis festgestellt wird, dass das passive optische Netzwerk die Services unterstützen kann.

9. Das Verfahren entsprechend Anspruch 6, zu dem weiterhin der Schritt der wiederholten Eingabe von Änderungen an Daten hinsichtlich der Merkmale des passiven optischen Netzwerks gehört, wenn festgestellt wird, dass die durchschnittlichen Verzögerungen nicht akzeptabel sind, und Wiederholen des Schritts der Feststellung der durchschnittlichen Verzögerung, bis festgestellt wird, dass die durchschnittlichen Verzögerungen akzeptabel sind.

10. Das Verfahren entsprechend Anspruch 7, zu dem weiterhin der Schritt des wiederholten Empfangs von Änderungen an Daten hinsichtlich der Merkmale des passiven optischen Netzwerks gehört, wenn festgestellt wird, dass die maximalen Verzögerungen nicht akzeptabel sind, und Wiederholen des Schritts der Feststellung der maximalen Verzögerung, bis festgestellt wird, dass die maximalen Verzögerungen akzeptabel sind.

11. Ein System zum Modellieren und zur Vorhersage des Kapazitätsmanagements eines passiven optischen Netzwerks zum Anschluss einer Reihe von Teilnehmern an ein zentrales Büro zwecks Bereitstellung eines Breitbandservice bestehend aus:
einer Userschnittstelle zum Empfang von Daten hinsichtlich mehrerer Merkmale des passiven optischen Netzwerks; und
einem Modellersteller eines passiven optischen Netzwerks zur Vorhersage der Leistung des passiven optischen Netzwerks über eine Echtzeit-Simulation unter Einbeziehung simulierter Verkehrsströme und wobei der Modellersteller basierend auf den empfangenen Merkmalen feststellt, ob das passive optische Netzwerks den bereitzustellenden Service basierend auf vorhergesagter Leistung liefern kann.

12. Das System entsprechend Anspruch 11, wobei die mehreren Merkmale des passiven optischen Netzwerks von der Reihe bestehend aus Folgenden ausgewählt werden; Art des passiven optischen Netzwerks, Anzahl der Teilnehmer, Servicebandbreiten, Serviceprioritäten, Parameter für dynamische Bandbreitenzuteilung, Pass-/Fail-Toleranzen, Rahmenparameter, Paketisierungsparameter und Ablaufparameter.

13. Das System entsprechend Anspruch 12, wobei die Daten hinsichtlich der Anzahl der Teilnehmer, Servicebandbreiten und Serviceprioritäten statistisch auf der Basis von wahrscheinlicher Abonnementnutzung und Vertragsabschlüssen erstellt werden.

14. Das System entsprechend Anspruch 12, wobei die Daten hinsichtlich der Anzahl der Teilnehmer, Servicebandbreiten und Serviceprioritäten auf Services basieren, die dem passiven, optischen Netzwerk zur Verfügung stehen.

15. Das System entsprechend Anspruch 12, wobei die Daten hinsichtlich der Anzahl von Services, Servicebandbreiten und Serviceprioritäten auf Teilnehmerauswahl basieren.

16. Das System entsprechend Anspruch 11, wobei der Modellersteller des passiven optischen Netzwerks eine durchschnittliche Verzögerung für jeden Servicetyp basierend auf den empfangenen Daten hinsichtlich der mehreren Merkmale des passiven optischen Netzwerks feststellt.

17. Das System entsprechend Anspruch 11, zu dem weiterhin Möglichkeiten für Folgende gehören:
Feststellen einer maximalen Verzögerung für jeden Servicetyp basierend auf den empfangenen Daten hinsichtlich der mehreren Merkmale des passiven optischen Netzwerks;
Vorlage der festgestellten maximalen Verzögerung für jeden Servicetyp basierend auf den empfangenen Daten hinsichtlich der mehreren Merkmale des passiven optischen Netzwerks.

## Revendications

1. Un procédé de modélisation et de prédiction d'une capacité de gestion d'un réseau optique passif à des fins de connexion d'une pluralité d'abonnés à un central téléphonique dans le but de fournir un service à large bande comprenant les opérations suivantes :
la réception de données concernant une pluralité de caractéristiques du réseau optique passif et des services à fournir au moyen du réseau optique passif,
la prédiction de la performance du réseau optique passif par l'intermédiaire d'une simulation en temps réel comprenant des flux de trafic simulés et basée sur les caractéristiques reçues,
la détermination si le réseau optique passif possède la capacité de fournir les services devant être fournis,
l'envoi de la détermination à un utilisateur.

2. Le procédé selon la Revendication 1 où la pluralité des caractéristiques du réseau optique passif est sélectionnée dans l'ensemble comprenant : type de réseau optique passif, nombre d'abonnés, bandes passantes de service, priorités de service, paramètres d'attribution de bande passante dynamique, tolérances de réussite/échec, paramètres de mise en trames, paramètres de mise en paquets et paramètres de planification.

3. Le procédé selon la Revendication 2 où les données concernant le nombre d'abonnés, les bandes passantes de service et les priorités de service sont générées statistiquement en fonction de probabilités de taux de souscription et d'utilisation d'abonnements.

4. Le procédé selon la Revendication 2 où les données concernant le nombre d'abonnés, les bandes passantes de service et les priorités de service sont basées sur un ensemble sélectionné de services sur un réseau optique passif unique.

5. Le procédé selon la Revendication 2 où les données concernant le nombre de services, les bandes passantes de service et les priorités de service sont basées sur des sélections d'abonnés.

6. Le procédé selon la Revendication 1 comprenant en outre les opérations suivantes :
la détermination d'un délai moyen pour chaque type de service en fonction des données reçues concernant la pluralité de caractéristiques du réseau optique passif,
la présentation du délai moyen déterminé pour chaque type de service à l'utilisateur.

7. Le procédé selon la Revendication 1 comprenant en outre les opérations suivantes :
la détermination d'un délai maximal pour chaque type de service en fonction des données reçues concernant la pluralité de caractéristiques du réseau optique passif,
la présentation du délai maximal déterminé pour chaque type de service en fonction des données reçues concernant la pluralité de caractéristiques du réseau optique passif.

8. Le procédé selon la Revendication 1 comprenant en outre l'opération d'entrée itérative de modifications aux données concernant les caractéristiques du réseau optique passif si la détermination est que le réseau optique passif ne possède pas la capacité de prendre en charge les services à fournir et la réitération de l'opération de détermination jusqu'à ce qu'il soit déterminé que le réseau optique passif possède la capacité de prendre en charge les services.

9. Le procédé selon la Revendication 6 comprenant en outre l'opération d'entrée itérative de modifications aux données concernant les caractéristiques du réseau optique passif si la détermination est que les délais moyens sont inacceptables et la réitération de l'opération de détermination du délai moyen jusqu'à ce qu'il soit déterminé que les délais moyens sont acceptables.

10. Le procédé selon la Revendication 7 comprenant en outre l'opération de réception itérative de modifications aux données concernant les caractéristiques du réseau optique passif si la détermination est que les délais maximaux sont inacceptables et la réitération de l'opération de détermination du délai maximal jusqu'à ce qu'il soit déterminé que les délais maximaux sont acceptables.

11. Un système de modélisation et de prédiction d'une capacité de gestion d'un réseau optique passif à des fins de connexion d'une pluralité d'abonnés au moyen de terminaux de locaux d'abonnés à un central téléphonique dans le but de fournir un service à large bande comprenant :
une interface utilisateur destinée à la réception de données concernant une pluralité de caractéristiques du réseau optique passif, et
un modélisateur de réseau optique passif destiné à la prédiction de la performance du réseau optique passif par l'intermédiaire d'une simulation en temps réel comprenant des flux de trafic simulés et basée sur des caractéristiques reçues, ledit modélisateur de réseau optique passif déterminant si le réseau optique passif possède la capacité de fournir le service devant être fourni en fonction de la performance prédite.

12. Le système selon la Revendication 11 où la pluralité des caractéristiques du réseau optique passif sont sélectionnées dans l'ensemble comprenant : type de réseau optique passif, nombre d'abonnés, bandes passantes de service, priorités de service, paramètres d'attribution de bande passante dynamique, tolérances de réussite/échec, paramètres de mise en trames, paramètres de mise en paquets et paramètres de planification.

13. Le système selon la Revendication 12 où les données concernant le nombre d'abonnés, bandes passantes de service et priorités de service sont générées statistiquement en fonction de probabilités de taux de souscription et d'utilisation d'abonnements.

14. Le système selon la Revendication 12 où les données concernant le nombre d'abonnés, bandes passantes de service et priorités de service sont basées sur des services disponibles sur le réseau optique passif.

15. Le système selon la Revendication 12 où les données concernant le nombre de services, bandes passantes de service et priorités de service sont basées sur des sélections d'abonnés.

16. Le système selon la Revendication 11 où le modélisateur de réseau optique passif détermine un délai moyen pour chaque type de service en fonction des données reçues concernant la pluralité de caractéristiques du réseau optique passif.

17. Le système selon la Revendication 11 comprenant en outre un moyen destiné à :
la détermination d'un délai maximal pour chaque type de service en fonction des données reçues concernant la pluralité de caractéristiques du réseau optique passif,
la présentation du délai maximal déterminé pour chaque type de service en fonction des données reçues concernant la pluralité de caractéristiques du réseau optique passif.
